# EUROPÄISCHE PATENTSCHRIFT

(11) **EP 0 928 711 B1**
(45) Veröffentlichungstag und Bekanntmachung des Hinweises auf die Patenterteilung: **30.05.2001**
(21) Anmeldenummer: 98123700.1
(22) Anmeldetag: 12.12.1998
(51) Int. Cl.: B60J 7/20

(54) **Verdeckkastendeckelanlenkung**
Linkage for soft top compartment lid
Articulation pour couvercle de coffre de capote

(30) Priorität: 08.01.1998 DE 19800384
(43) Veröffentlichungstag der Anmeldung: 14.07.1999
(73) Patentinhaber: Edscha Cabrio-Dachsysteme GmbH, 94491 Hengersberg (DE)
(72) Erfinder: Haberl, Franz, 94574 Wallerfing (DE); Striegl, Theodor, 84140 Gangkofen (DE)
(74) Vertreter: Sparing, Rolf Klaus

(56) Entgegenhaltungen:
- EP-A- 0 846 584
- DE-C- 19 525 587
- FR-A- 2 696 375

## Beschreibung

Die Erfindung betrifft eine Anlenkung nach dem Oberbegriff des Anspruchs 1 fur einen aus einer Verschlußstellung in eine Offenstellung verlagerbaren Verdeckkastendeckel.

Die Verdeckkastendeckel für den Verdeckkasten eines Cabrioletfahrzeuges sind meist vermittels einer im Bereich des rückwartigen Öffnungrandes angeschlagenen, einfachen Scharniereinrichtung drehbar angelenkt. Hierdurch tritt häufig das Problem auf, daß der Verdeckkastendeckel beim Verschwenken einen verhältnismäßig großen Schwenkwinkelbereich bzw. Schwenkradius beansprucht. Da bei vielen Ausführungsformen von Cabrioletfahrzeugen der Verdeckkastendeckel bei geschlossenem Verdeck zumindestens teilweise vom Spannbügel des Verdeckgestänges ubergriffen wird, ist es nötig, den Spannbugel vor der Verschwenkbewegung des Verdeckkastendeckels von seiner annähernd horizontalen Wirklage in eine gegen die Horizontale geneigte, etwa vertikale Position zu verschwenken, damit eine Freigabe des Verdeckkastendeckels erfolgt und eine Verdeckkastendeckelbewegung ermöglicht wird. Da die Schwenkbewegung von Spannbügel und Verdeckkastendeckel zur Vermeidung von Kollisionen notwendigerweise zeitlich aufeinander abgestimmt sind, ergibt sich hierbei weiterhin der Nachteil, daß aufgrund der notwendigen, großen Schwenkwinkelbewegung des Spannbügels auch die Verdeckbetatigungszeit ingesamt vergrößert wird.

Des Weiteren ergibt sich bei einer Anlenkung des Verdeckkastendeckels vermittels eines einfachen Drehgelenkes der Nachteil, daß bei Faltverdecken mit starren Heckscheiben beim Verschwenken des Spannbügels die Heckscheibe weit in den Fahrgastraum im Fond des Fahrzeuges eintaucht, so daß bei großem Schwenkwinkelbereich des Spannbügels der Fahrgastraum im Fondbereich durch die eintauchende Heckscheibe derart reduziert wird, daß eine Betätigung des Verdeckes bei mit Passagieren besetztem Fondraum nicht möglich ist, ohne diese Passagiere zu gefährden.

Die gattungsgemässe DE-C-195 25 587 zeigt eine Anlenkung für einen Verdeckkastendeckel, die als Viergelenkscharnier ausgebildet ist und dementsprechend aus zwei schwenkbeweglich an entsprechenden seitlich am Verdeckkasten angeordneten Anschlagteilen gelagerten Lenkern besteht, von denen einer geradlinig und der andere abgekröpft ausgebildet ist. Beim Öffnen des

Verdeckkastendeckels wird dessen vorderer Rand gegenüber dem hinteren Rand stärker angehoben, so daß im Bereich der vorderen Kante des Verdeckkastendeckels eine sehr weit nach oben reichende Schwenkkurve vollzogen wird.

Es ist die Aufgabe der Erfindung, eine Anlenkung für einen Verdeckkastendeckel nach dem Oberbegriff des Anspruchs 1 anzugeben, welche bei einfacher Ausgestaltung während des Öffnens mit dem vorderen Verdeckkastendeckelrand eine zunächst eine flache Bahnkurve beschreibt.

Diese Aufgabe wird bei der eingangs genannten Anlenkung für einen Verdeckkastendeckel erfindungsgemäß mit den kennzeichnenden Merkmalen des Patentanspruchs 1 gelöst.

Die erfindungsgemäße Anlenkung ermöglicht bei Beginn des Öffnungsvorgangs auch bei ungünstiger Anordnung des verdeckkastenseitig angeordneten Anschlagteils, beispielsweise wenn ein ungünstiger Momentanpol für die Verdeckkastendeckelbewegung besteht, eine günstige Bahnkurve des vorderen Verdeckkastendeckelrands, die flach und damit optimal ist. Hierdurch muß der heckseitige Spannbügel des Verdecks nur noch geringfügig angehoben werden und ragt demnach kaum noch in den Fahrgastraum des Fahrzeugs hinein.

Die Anlenkung vermittels eines Viergelenkes bewirkt, daß dem Verdeckkastendeckel während seiner Verschwenkbewegung in seine Öffnungslage eine unmittelbar vom Schwenkwinkel abhängige Kippbewegung aufgezwungen wird, derart, daß zu Beginn der Öffnungsphase der Verdeckkastendeckel zuerst im Bereich seines hinteren Randes angehoben wird, wodurch der vordere Verdeckkastenrand über einen bestimmten Schwenkwinkelbetrag des Verdeckkastendeckels eine nach unten gerichtete Bewegung ausführt, so daß die Bahnkurve der Vorderkante des Verdeckkastendeckels, gegenuber einer herkommlichen Anlenkung, abgeflacht wird.

Die gegenuber den Bahnkurven herkommlicher Verdeckkastendeckel-anlenkungen abgeflachte Bahnkurve bewirkt im wesentlichem, daß der für die vollstandige Freigabe des Verdeckkastens notwendige Schwenkwinkel des Spannbügel reduziert werden kann, wodurch einerseits die Verdeckbetätigungszeit und andererseits der für die Heckscheibenbewegung notwendige Freiraum im Fond des Fahrzeuges reduziert wird.

Im einer vorteilhaften Ausgestaltung der Erfindung ist vorgesehen, daß der, den Schwenkradius eines Scharnierarmes bestimmende, Abstand zwischen den beiden Anlenkpunkten eines Scharnierarmes bei beiden Scharnierarmen unterschiedlich groß ausgebildet ist, derart, daß sich für beide Scharnierarme unterschiedliche Schwenkradien ergeben. Hierdurch ergibt sich insbesondere der Vorteil, daß die der Schwenkbewegung des Verdeckkastendeckels überlagerte Kippbewegung definiert beeinflußt werden kann, derart, daß bei beliebiger Anordnung der Anschlagteile an Karrosserie und Verdeckkastendeckel eine optimale, flache Bewegungskurve des Verdeckkastendeckels erreicht werden kann.

In einer weiteren vorteilhaften Ausgestaltungsform der Erfindung ist vorgesehen, daß die beiden Lagerbocke eines jeden Anschlagteiles in Fahrtzeuglängsrichtung hintereinanderliegend und seitlich versetzt zueinander angeordnet sind, derart daß die beiden Scharnierarme in unterschiedlichen vertikalen, zueinander parallelen Bewegungsebenen angeordnet sind, wobei der Abstand der beiden vertikalen Ebenen zueinander größer ist als Breite eines der beiden Scharnierarme, so daß bei benötigten großem Schwenkwinkelbereich die beiden Scharnierarme aneinander vorbeibewegt werden können.

In einer weiteren bevorzugten Ausgestaltungsform der Verdeckkastenanlenkung ist vorgesehen, daß die beiden Scharnierarme einenends gekröpfte Endbereiche aufweisen. Diese gekröpften Endbereiche der Scharnierarme sind den Lagerpunkten am karosserieseitigen Anschlagteil zugeordnet und sind hinsichtlich ihrer Krümmungsradien derart ausgelegt, daß der hintere Offnungsrand des Verdeckkastens bei geöffneten Verdeckkastendeckel von den Scharnierarmen übergriffen werden kann, wodurch ein maximaler Verschwenkwinkel des Verdeckkastendeckels erreicht werden kann, ohne entsprechende, zusätzliche, den Schwenkwinkel erweiternde Maßnahmen an Karrosserieteilen und/oder Verdeckkastendeckel vorsehen zu müssen.

Für den Fall, daß die beiden für die Anlenkung der Scharnierarme vorgesehen Lagerböcke in Einbaulage des karosserieseitigen Anschlagteiles im wesentlichen übereinander angeordnet sind, ist vorgesehen, beide Scharnierarme hinsichtlich ihres gekröpften Endbereiches insbesonders bezüglich ihres Krümmungsradius und ihrer Krümmungsform unterschiedlich auszubilden, derart , daß beide Scharnierarme auch bei in Einbaulage des Anschlagelementes in horizontaler und vertikaler Richtung versetzt zueinander angeordneten Lagerbocken den ninteren Öffnungsrand des Verdeckkasten bei geoffnetem Verdeckkastendeckel wenigsten teilweise umgreifen konnen.

Für die Begrenzung des maximalen Schwenkwinkels kann vorgesehen sein, am verdeckkastenseitig angeordneten Anschlagteil einen Anschlag, welcher mit einem komplementar ausgebildeten Abschnitt eines Scharnierames zusammenwirkt, anzuordnen.

In einer weiteren vorteilhafter. Ausführungsform kann vorgesehen sein daß im Bereich der langlochformigen Ausnehmung am Scharnierarm eine auf den Gelenkbolzen wirkende Halteeinrichtung angeordnet ist, welche den Gelenkbolzen in Abhangigkeit des Verschwenkwinkels des Verdeckkastendeckels freigibt bzw. arretiert, derart, daß eine aus einem ungünstigen Momentanpol resultierende nach unten gerichtete, übermäßige Kippbewegung des vorderen Verdeckkastendeckelrandes, welche zu einem. Schleifen des vorderen Verdeckkastendeckelrandes auf dem Verdeckkasten oder Karrosserieteilen führen kann, vermieden wird.

Es kann im Weiterem auch vorgesehen sein, daß einer der beiden Scharnierarme mit einer motorischen Antriebseinheit, beispielsweise einem Elektromotor, hydraulischen oder pneumatischen Antriebseinheit für die automatische Verdeckkastendeckelbetatigung gekoppelt ist.
Fig.1 zeigt eine erfindungemäße Verdeckkastendeckelanlenkung in der Seitenansicht.
Fig.2 zeigt- eine vergrößerte Darstellung der erfindungsgemäßen Verdeckkastenanlenkung aus Fig. 1.
Fig.3 zeigt eine Variante der Gelenkverbindung zwischen verdeckkastendeckelseitig angeordnetem Anschlagteil und Scharnierarmen.

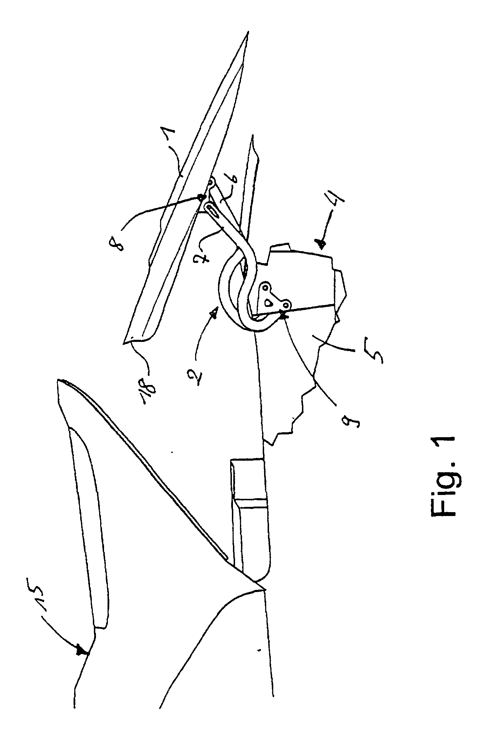

Fig. 1 zeigt eine Anlenkung für einen aus einer Verschlußstellung über eine Schwenkbewegung in eine Offenstellung verlagerbaren Verdeckkastendeckel 1, wobei der Verdeckkastendeckel 1 vermittels einer Scharniervorrichtung 2 um eine im Bereich des rückwärtigen Öffnungsrandes 3 verlaufende Achse derart schwenkbar an der Fahrzeugkarosserie 4 angelenkt ist, daß er in seiner Schlußlage den das zusammengeklappte Verdeck 15 aufnehmenden Verdeckkasten 5 übergreift und in seiner Öffnungslage den Verdeckkasten 5 völlig freigibt.
Wie in der Figur 1 dargestellt, erfolgt die Anlenkung des Verdeckkastensdeckels 1 mittels zweier Scharnierarme 6,7, wobei die beiden Scharnierarme 6, 7 einerseits an einem deckelseitigem Anschlagteil 8 und andrerseits an einem karosserieseitigem Anschlagteil 9 drehbar gelagert sind, derart, daß eine Viergelenkanlenkung des Verdeckkastendeckels 1 ensteht.
Jedes Anschlagteil 8, 9 weist hierbei zwei Lagerbocke 10,11 für die eigenständige Lagerung je eines Scharnierarmes 6, 7 auf, wobei die beiden Lagerbocke 10,11 eines jeden Anschlagteiles 8,9 hinsichlich der drei Raumebenen x,y,z versetzt zueinander angeordnet sind. Der Versatz der Lagerböcke in z- Richtung bewirkt hierbei, daß die beiden Scharnierarme 6, 7 wahrend des Schwenkvorganges aneinander vorbeigeführt werden konnen.

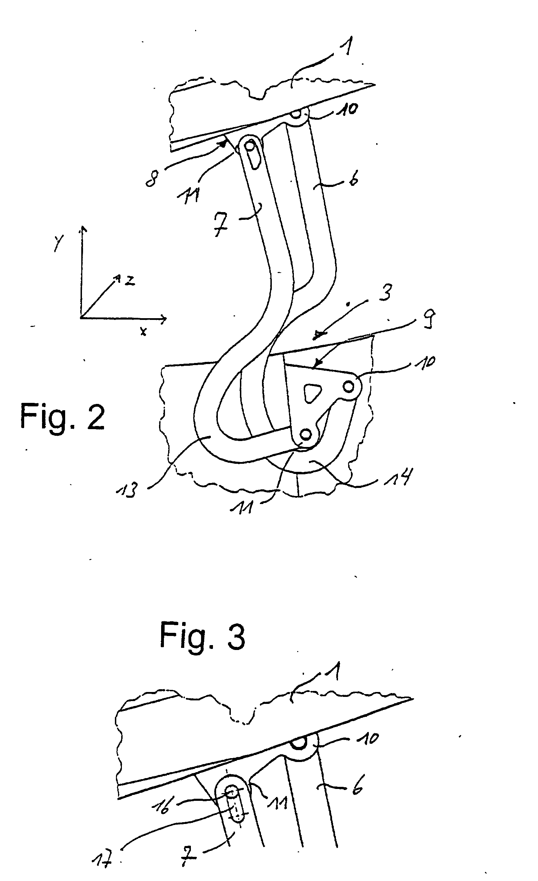

Bei der in Fig. 1 und 2 dargestellten Ausführungsform weisen die beiden Scharnierarme 6, 7 in den der karrosserieseitigen Anlenkung zugewandten Endbereichen gekröpfte Abschnitte 13, 14 auf, wobei diese Kröpfung bei beiden Scharnierarmen 6,7 unterschiedlich ausgepragt ist, derart, daß sie auf den sich aufgrund der vorgesehenen Einbaulage des Anschlagteiles 9 ergebenden Abstand zwischen rückwärtigen Öffnungsrand 3 und Anlenkpunkt am karrosserieseitigen Anschlagelement abgestimmt sind, so daß bei dem die maximale Öffnungslage darstellenden Schwenkwinkel der hintere Offnungsrand 3 des Verdeckkastens 5 von den gekröpften Abschnitten der Scharnierarme umgriffen wird.

Die in Fig. 3 dargestellte Ausführungsform der verdeckkastenseitigen Anlenkung der Scharnierarme zeigt eine langlochförmge Führung 17 an dem vorderen Scharnierarm 7, welche von einem am Lagerbock 8 angeordneten Gelenkbolzen 16 durchgriffen wird. Diese langlochförmige Führung 17 ermöglicht dem Verdeckkastendeckel 1 eine zusatzliche translatorische Bewegungsfreiheit gegenüber diesem Scharnierarm 7 , wodurch die maximale Auslenkung des Verdeckkastendeckels 1 , bzw. die Kippbewegung des Verdeckkastendeckels 1 beinflußt wird, derart, daß die Bewegungskurve der vorderen Verdeckkastendeckelkante 18 optimal auf die Karrosserieform und Spannbuelbewegung abgestimmt ist.

## Patentansprüche

1. Anlenkung für einen aus einer Verschlußstellung über eine Schwenkbewegung in eine Offenstellung verlagerbaren Verdeckkastendeckel (1), wobei der Verdeckkastendeckel (1) vermittels einer Scharniervorrichtung (2) um eine im Bereich des rückwärtigen Öffnungsrandes verlaufende Achse derart schwenkbar an der Fahrzeugkarosserie (4) angelenkt ist, daß er in seiner Schließlage den das zusammengeklappte Verdeck (15) aufnehmenden Verdeckkasten (5) übergreift und in seiner Öffnungslage den Verdeckkasten (5) völlig freigibt, wobei die Anlenkung des Verdeckkastensdeckels (1) ein Viergelenk umfaßt, das aus zwei langgestreckten Scharnierarmen (6, 7), einem verdeckkastendeckelseitigen (8) und einem karrosserieseitigen (9) Anschlagteil besteht, wobei die beiden Scharnierarme (6, 7) des Viergelenks einerseits am deckelseitigen Anschlagteil (8) und andererseits am karosserieseitigen Anschlagteil (9) drehbar gelagert sind, wobei jedes Anschlagteil zwei Lagerböcke (10, 11) für die gesonderte Lagerung je eines Scharnierarmes (6, 7) aufweist,
dadurch gekennzeichnet,
daß wenigstens ein Scharnierarm (7) mit einer in seiner Längsrichtung verlaufenden, langlochförmigen Ausnehmung (17) für die Aufnahme eines am verdeckkastendeckelseitig angeordneten Anschlagteil (8) angebrachten Gelenkbolzens (16) versehen ist.

2. Anlenkung für einen Verdeckkastendeckel nach Anspruch 1, dadurch gekennzeichnet, daß die beiden Lagerböcke (10, 11) eines jeden Anschlagteils (8, 9) bezüglich aller drei Raumebenen x ,y, z zueinander versetzt angeordnet sind.

3. Anlenkung für einen Verdeckkastendeckel nach Anspruch 1 oder 2,
dadurch gekennzeichnet, daß die beiden Scharnierarme (6, 7) einenends gekröpfte Endbereiche (13, 14) aufweisen, wobei die gekröpften Endbereiche Anlenkpunkten am karosserieseitigen Anschlagteil (8) zugeordnet sind.

4. Anlenkung für einen Verdeckkastendeckel nach Anspruch 3, dadurch gekennzeichnet, daß beiden Scharnierarme (6, 7) hinsichtlich ihres gekröpften Endbereiches (13, 14) unterschiedlich ausgebildete Krümmungsradien aufweisen.

5. Anlenkung für einen Verdeckkastendeckel nach einem der Ansprüche 1 bis 4, dadurch gekennzeichnet, daß das verdeckkastenseitig angeordnete Anschlagteil (9) einen Anschlag aufweist, welcher mit einem komplementär ausgebildeten Abschnitt eines Scharnierarms zusammenwirkt.

6. Anlenkung für einen Verdeckkastendeckel nach einem der Ansprüche 1 bis 5, dadurch gekennzeichnet, daß der die wirksame Länge eines Scharnierarmes (6, 7) bestimmende Abstand zwischen den beiden Anlenkpunkten eines Schamierarmes (6, 7) bei beiden Scharnierarmen (6, 7) unterschiedlich groß ausgebildet ist, derart, daß sich für beide Scharnierarme (6, 7) unterschiedliche Schwenkradien ergeben.

7. Anlenkung für einen Verdeckkastendeckel nach einem der Ansprüche 1 bis 6, dadurch gekennzeichnet, daß im Bereich der langlochförmigen Ausnehmung (17) am Schamierarm (7) eine auf den Gelenkbolzen (16) wirkende Halteeinrichtung angeordnet ist, welche den Gelenkbolzen (16) in Abhängigkeit des Verschwenkwinkels des Verdeckkastendeckels (1) freigibt bzw. arretiert, derart, daß eine Kippbewegung des Verdeckkastendeckels (1) während des Verschwenkens erzwungen wird.

8. Anlenkung für einen Verdeckkastendeckel nach einem der Ansprüche 1 bis 7, dadurch gekennzeichnet, daß einer der beiden Scharnierarme (6, 7) mit einer motorischen Antriebseinheit für eine automatische Verdeckkastendeckelbetätigung gekoppelt ist.

9. Anlenkung für einen Verdeckkastendeckel nach einem der Ansprüche 1 bis 8, dadurch gekennzeichnet, daß das karrosserieseitige Anschlagteil (9) an einem hinteren Rand (3) des Verdeckkastens (5) angeschlagen ist.

10. Anlenkung für einen Verdeckkastendeckel nach einem der Ansprüche 1 bis 9, dadurch gekennzeichnet, daß in der Verschlußstellung ein abhebbarer Spannbügel des Verdecks (15) wenigstens teilweise im Schwenkweg des Verdeckkastendeckels (1) angeordnet ist.

## Claims

1. Linkage for a soft top compartment lid (1) which can be moved from a closed position into an opened position by a pivoting movement, wherein the soft top compartment lid (1) is coupled to the vehicle body (4) so as to be pivotable about an axis extending in the region of the back opening edge by means of a hinge device (2) in such a way that in its closed position, it lids the soft top compartment (5) receiving the folded-back soft top (15) and in its opened position completely exposes the soft top compartment (5), wherein the linkage of the soft top compartment lid (1) comprises a four bar linkage which consists of two elongated hinge arms (6, 7), a soft top compartment lid-side stop part (8) and a body-side stop part (9), wherein the two hinge arms (6, 7) of the four bar linkage are rotatably mounted, on the one hand, on the lid-side stop part (8) and, on the other hand, on the body-side stop part (9), wherein each stop part has two brackets (10, 11) for separate arrangement of a hinge arm (6, 7) in each case, characterised in that at least one hinge arm (7) is provided with a slot-shaped recess (17) extending in its longitudinal direction for receiving a hinge pin (16) attached to the stop part (8) arranged on the soft top compartment lid-side.

2. Linkage for a soft top compartment lid according to claim 1, characterised in that the two brackets (10, 11) of each stop part (8, 9) are mutually offset with respect to all three spatial planes x, y, z.

3. Linkage for a soft top compartment lid according to claim 1 or 2, characterised in that the two hinge arms (6, 7) have cranked end regions (13, 14) at one end, wherein the cranked end regions are associated with linkage points on the body-side stop part (8).

4. Linkage for a soft top compartment lid according to claim 3, characterised in that the two hinge arms (6, 7) have different radii of curvature with regard to their cranked end regions (13, 14).

5. Linkage for a soft top compartment lid according to one of claims 1 to 4, characterised in that the stop part (9) arranged on the soft top compartment-side has a stop which interacts with a complementary portion of a hinge arm.

6. Linkage for a soft top compartment lid according to one of claims 1 to 5, characterised in that the distance between the two linkage points of a hinge arm (6, 7) which determines the effective length of a hinge arm (6, 7) is designed so as to be different in the two hinge arms (6, 7) and in such a way that different pivoting radii are produced for the two hinge arms (6, 7).

7. Linkage for a soft top compartment lid according to one of claims 1 to 6, characterised in that a holding device which acts on the hinge pin (16) is arranged in the region of the slot-shaped recess (17) on the hinge arm (7), which device releases or stops the hinge pin (16) as a function of the pivoting angle of the soft top compartment lid (1) in such a way that a tilting movement of the soft top compartment lid (1) is induced during pivoting.

8. Linkage for a soft top compartment lid according to one of claims 1 to 7, characterised in that one of the two hinge arms (6, 7) is coupled to a motorised drive unit for automatic activation of the soft top compartment lid.

9. Linkage for a soft top compartment lid according to one of claims 1 to 8, characterised in that the body-side stop part (9) is fixed to a back edge (3) of the soft top compartment (5).

10. Linkage for a soft top compartment lid according to one of claims 1 to 9, characterised in that a removable clamp clip of the soft top (15) is arranged in the closed position at least partially in the pivoting path of the soft top compartment lid (1).

## Revendications

1. Articulation pour couvercle de coffre de capote **(1),** déplaçable d'une position de fermeture en une position d'ouverture par un mouvement de pivotement, le couvercle de coffre de capote **(1)** étant articulé à pivotement sur la carrosserie de véhicule **(4)** au moyen d'un dispositif formant charnière **(2),** autour d'un axe, s'étendant dans la zone du bord d'ouverture arrière, de manière que, dans sa position de fermeture, il entoure par le dessus le coffre de capote **(5)** logeant la capote **(15)** repliée et que, dans sa position d'ouverture, il dégage complètement le coffre de capote **(5),** l'articulation du couvercle du coffre de capote **(1)** comprenant une articulation à quadrilatère articulé qui est constituée de deux bras de charnière **(6, 7)** allongés, d'une partie de montage **(8)** située du côté du couvercle de coffre de capote et d'une partie de montage **(9)** située du côté carrosserie, les deux bras de charnière **(6, 7)** de l'articulation à quadrilatère articulé étant montés à rotation, d'une part, sur la partie de montage côté couvercle **(8)** et, d'autre part, sur la partie de montage **(9)** côté carrosserie, chaque partie de montage présentant deux blocs paliers **(10, 11)** pour le tourillonnement séparé de chaque bras de charnière **(6, 7),** caractérisé en ce que au moins un bras de charnière **(7)** est muni d'un évidement **(17)** en forme de trou oblong, s'étendant dans sa direction longitudinale, afin de recevoir un boulon d'articulation **(16)** monté sur la partie de montage **(8)** disposée côté couvercle de coffre de capote.

2. Articulation pour un couvercle de coffre de capote selon la revendication 1, caractérisé en ce que les deux blocs paliers **(10, 11)** de chaque partie de montage **(8, 9)** sont décalés les uns par rapport aux autres par rapport à la totalité des trois plans spatiaux x, y, z.

3. Articulation pour un couvercle de coffre de capote selon la revendication 1 ou 2, caractérisée en ce que les deux bras de charnière **(6, 7)** présentent à une extrémité des zones d'extrémité **(13, 14)** coudées, les zones d'extrémité coudées étant associées à des points d'articulation situés sur la partie de montage **(8)** se trouvant côté carrosserie.

4. Articulation pour un couvercle de coffre de capote selon la revendication 3, caractérisée en ce que les deux bras de charnière **(6, 7)** présentent des rayons de courbures différents à leur zone d'extrémité **(13, 14)** coudée.

5. Articulation pour un couvercle de coffre de capote selon l'une des revendications 1 à 4, caractérisée en ce que la partie de montage **(9)** disposée du côté du coffre de capote présente une pièce de montage coopérant avec un tronçon, de réalisation complémentaire, d'un bras de charnière.

6. Articulation pour un couvercle de coffre de capote selon l'une des revendications 1 à 5, caractérisée en ce que l'espacement, déterminant la longueur efficace d'un bras de charnière **(6, 7),** entre les deux points d'articulation d'un bras de charnière **(6, 7)** est différent pour les deux bras de charnière **(6, 7),** de manière que les rayons de pivotement des deux bras de charnière **(6, 7)** soient différents.

7. Articulation pour un couvercle de coffre de capote selon l'une des revendications 1 à 6, caractérisée en ce que, dans la zone de l'évidement **(17)** en forme de trou oblong, est disposé sur le bras de charnière **(7)** un dispositif de maintien agissant sur le boulon d'articulation **(16),** dispositif qui libère ou bloque le boulon d'articulation **(16)** en fonction de l'angle de pivotement du couvercle de coffre de capote **(1),** de manière qu'un mouvement de basculement du couvercle de coffre de capote **(1)** soit produit obligatoirement pendant le processus de pivotement.

8. Articulation pour un couvercle de coffre de capote selon l'une des revendications 1 à 7, caractérisée en ce que l'un des deux bras de charnière **(6, 7)** est couplé à une unité d'entraînement à moteur, pour assurer un actionnement automatique du couvercle de coffre de capote.

9. Articulation pour un couvercle de coffre de capote selon l'un des revendications 1 à 8, caractérisé en ce que la partie de montage **(9)** située côté carrosserie est montée sur un bord arrière **(3)** du coffre de capote **(5).**

10. Articulation pour un couvercle de coffre de capote selon l'une des revendications 1 à 9, caractérisé en ce que, dans la position de fermeture, un arceau tendeur, susceptible d'être enlevé, de la capote **(15)** est disposé au moins partiellement dans la course de pivotement du couvercle de coffre de capote **(1).**
